# EUROPEAN PATENT APPLICATION

(11) **EP 3 318 729 A1**
(43) Date of publication of application: **09.05.2018**
(21) Application number: 17199693.7
(22) Date of filing: 02.11.2017
(51) Int. Cl.: F01D 25/16, F01D 25/20, F01D 25/12, F01D 9/06

(54) **APPARATUS AND METHOD FOR PROVIDING FLUID TO A BEARING DAMPER**

(30) Priority: 04.11.2016 US 201615344132
(71) Applicant: United Technologies Corporation, Farmington, CT 06032 (US)
(72) Inventor: AVIS, Thomas Bruce, Manchester, CT Connecticut 06040 (US); DREHER, Michael, Prospect, CT Connecticut 06712 (US); GRANSTRAND, Erik R., West Hartford, CT Connecticut 06119 (US)
(74) Representative: Stevens, Jason Paul

(57) **Abstract**

Disclosed is a lubricant supply system (100) for a bearing damper (101) in an engine bearing compartment (38) of a gas turbine engine (20), the bearing compartment (38) rotatably supporting an engine component, including a first interface (102), a second interface (104), a supply conduit (106) fluidly coupled to the second interface (104) and extending from the first interface (102) to the second interface (104), the conduit (106) supplying lubricant to the bearing damper (101) and including a first discrete cavity (112), extending proximate to the first interface (102), a second discrete cavity (114), extending proximate to the second interface (104), the discrete cavities (112, 114), mutually spaced to be substantially outside a core gas path C of the engine (20), the discrete cavities (112, 114) being air sealed against the supply conduit (106), insulating fluid in the supply conduit (106) from heat transferred from the interfaces (112, 114).

## Description

### BACKGROUND

This disclosure relates to gas turbine engines, and more particularly to an apparatus and method for providing fluid to a bearing damper of the gas turbine engine.

Gas turbine engines are used in numerous applications, one of which is for providing thrust to an aircraft. When a gas turbine engine of an aircraft has been shut off for example, after an aircraft has landed at an airport, the engine is hot and due to heat rise, the upper portions of the engine will be hotter than lower portions of the engine. When this occurs thermal expansion may cause deflection of components of the engine which may result in a "bowed rotor" condition. When starting an engine with a "bowed rotor" condition, a resulting significant rotational imbalance can excite fundamental modes of components of the engine. This in turn produces excessive deflections of the engine rotor, while bowing of the engine case can result in a reduction in normal build clearances and thus results in a potential for rubbing between the rotating turbomachinery and the closed-down case structure. The rub condition can result in a hung start or a performance loss in the turbomachinery.

Accordingly, it is desirable to provide a method and/or apparatus for providing fluid to a bearing damper of a gas turbine engine.

### BRIEF DESCRIPTION

Disclosed is a lubricant supply system for a bearing damper in an engine bearing compartment of a gas turbine engine, the bearing compartment rotatably supporting an engine component, comprising: a first interface; a second interface; a supply conduit fluidly coupled to the second interface and extending from the first interface to the second interface; the conduit supplying lubricant to the bearing damper and including: a first discrete cavity extending proximate to the first interface; a second discrete cavity extending proximate to the second interface; the discrete cavities being mutually spaced to be substantially outside a core gas path of the engine; the discrete cavities being air sealed against the supply conduit, insulating fluid in the supply conduit from heat transferred from the interfaces.

In addition to one or more of the features described above, or as an alternative, in further embodiments the discrete cavities may be air sealed inner tubes creating airtight pockets for thermal protection.

In addition to one or more of the features described above, or as an alternative, in further embodiments the supply conduit may include thermal insulation and shielding located to be substantially inside a core gas path of the engine.

In addition to one or more of the features described above, or as an alternative, in further embodiments, the component may be a turbine section, which includes a high pressure turbine; the first interface may be a turbine intermediate case interface; the second interface may be a bearing compartment interface; and the supply conduit may be a bearing damper supply conduit.

In addition to one or more of the features described above, or as an alternative, further embodiments may include a lubricant inlet at the turbine intermediate case interface through which lubricant flows into the conduit, and an outlet at the bearing compartment interface through which lubricant flows into a bearing compartment.

Further disclosed is a gas turbine engine, comprising: a bearing compartment rotatably supporting a component of the engine, the bearing compartment including a bearing damper; a lubricant supply system for the bearing damper, comprising: a first interface; a second interface; a supply conduit fluidly coupled to the second interface and extending from the first interface to the second interface; the conduit supplying lubricant to the bearing damper and including: a first discrete cavity extending proximate to the first interface; a second discrete cavity extending proximate to the second interface; the discrete cavities being mutually spaced to be substantially outside a core gas path of the engine; the discrete cavities being air sealed against the supply conduit, insulating fluid in the supply conduit from heat transferred from the interfaces.

In addition to one or more of the features described above, or as an alternative, in further embodiments the discrete cavities may be air sealed inner tubes creating airtight pockets for thermal protection.

In addition to one or more of the features described above, or as an alternative, in further embodiments the supply conduit may include thermal insulation and shielding, located to be substantially inside a core gas path of the engine.

In addition to one or more of the features described above, or as an alternative, further embodiments may include a high pressure turbine; the first interface may be a turbine intermediate case interface; the second interface may be a bearing compartment interface; and the supply conduit may be a bearing damper supply conduit.

In addition to one or more of the features described above, or as an alternative, in further embodiments the system may include a lubricant inlet at the turbine intermediate case interface through which lubricant flows into the conduit, and an outlet at the bearing compartment interface, through which lubricant flows into a bearing compartment.

Yet further disclosed is a method of supplying lubricant to a bearing damper of a bearing compartment of a gas turbine engine, comprising: fluidly coupling a damper supply conduit to the bearing damper; and insulating the lubricant in the supply conduit from heat transferred through interfaces, connecting the supply conduit to the engine with discrete air filled cavities in the supply conduit, the cavities located proximate to the interfaces and mutually spaced to be located substantially outside a core gas path of the engine.

### BRIEF DESCRIPTION OF THE DRAWINGS

The following descriptions should not be considered limiting in any way. With reference to the accompanying drawings, like elements are numbered alike:
Fig. 1 is a cross section of a disclosed gas turbine engine;
Fig. 2 illustrates a first section of a turbine bearing damper supply according to an embodiment; and
Fig. 3 illustrates a second section of a turbine bearing damper supply according to an embodiment.

### DETAILED DESCRIPTION

A detailed description of one or more embodiments of the disclosed apparatus and method is presented herein by way of exemplification and not limitation with reference to the Figures.

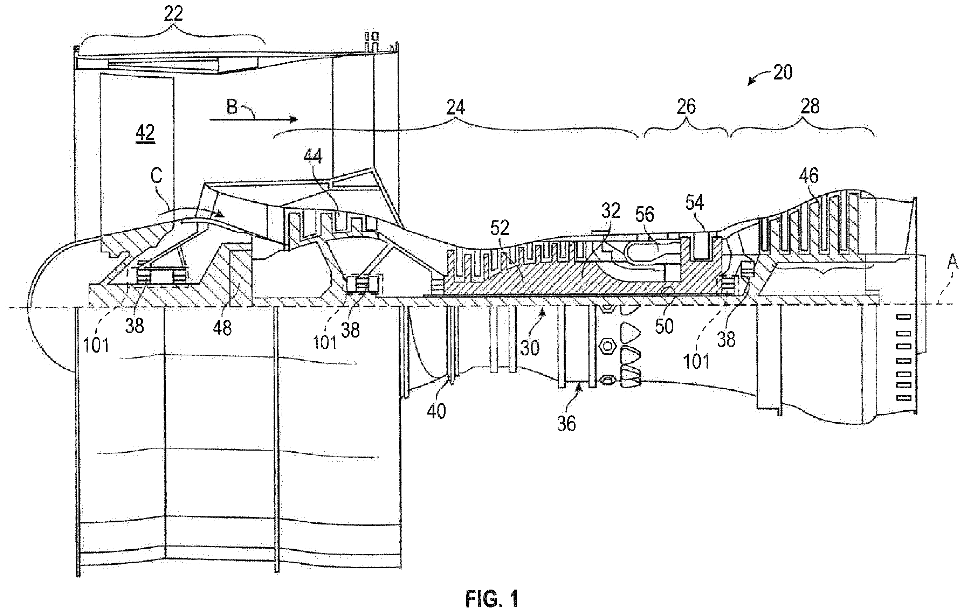

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans, as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing compartments 38. It should be understood that various bearing compartments 38 at various locations may alternatively or additionally be provided, and the location of bearing compartments 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing compartments 38 in the turbine section 28. The inner shaft 40 and the outer shaft 50 are concentric and rotate via bearing compartments 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicyclic gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition - typically cruise at about 0.8 Mach and about 35,000 feet (about 10,700 meters). The flight condition of 0.8 Mach and 35,000 ft (10,700 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (about 350 m/sec).

Various embodiments of the present disclosure are related to a damping system in a gas turbine engine. To assist in minimizing the potential and impact of a bowed rotor start response, a gas turbine engine employs one or more fluid film/squeeze-film dampers in bearing supports to provide viscous type damping and dissipation of the bowed rotor excitation energy as well as other sources of vibration. However, at low speeds where bowed rotor modes occur in the operating range, the dampers may not always be filled sufficiently with oil or fully pressurized so that the dampers may not be providing sufficient or optimal damping to counteract the bowed rotor response. Additionally, as the oil pumps are typically driven by rotation of the engine, oil pumps used to lubricate and dampen vibrations within a gas turbine engine may not provide sufficient oil pressure at start-up and at low speeds.

Moreover, due to exposure to intense heat in hotter sections of the gas turbine engine, such as in the turbine section 28, and specifically, in the high pressure turbine 54, oil directed to the damper bearings for the high pressure turbine via, e.g., the turbine intermediate case, may heat up and coke.

Specifically, the bearing damper 101 for the high pressure turbine 54 is fed by the oil feed line that supplies oil to the rest of the bearing compartments 38. A bowed rotor in the high pressure turbine 54, caused by heat rising inside the engine 20 during heat soak after shutdown, can cause an imbalance during the next engine start. The imbalance in the high pressure turbine 54 can cause blades to contact the cases during a bowed rotor start which can then lead to loss of stall margin.

The bearing damper 101 in the high pressure turbine 54 can mitigate imbalance in the rotor. As indicated, the damper 101 in the high pressure turbine 54 may be ineffective at start, due to low oil pressure, because oil pressure is driven by the engine rotor shaft which slowly spools up. Therefore, with the damper 101 in the high pressure turbine 54 failing at start-up to adequately dampen out the imbalance caused by the bowed rotor, start times are purposely longer to prevent rubbing blades out.

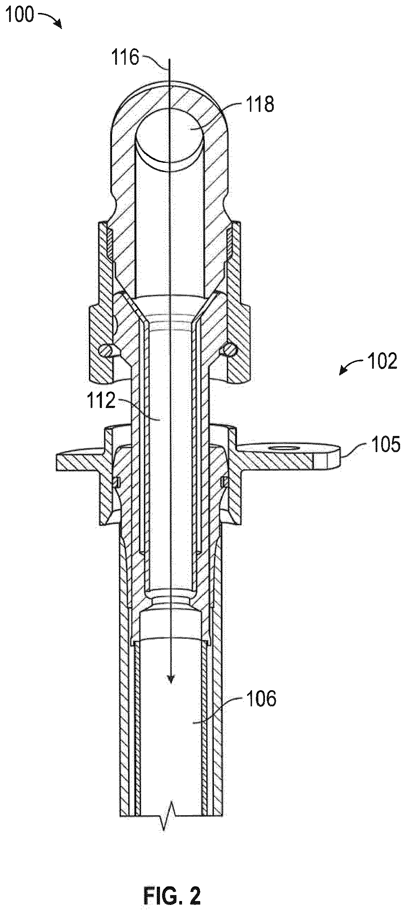

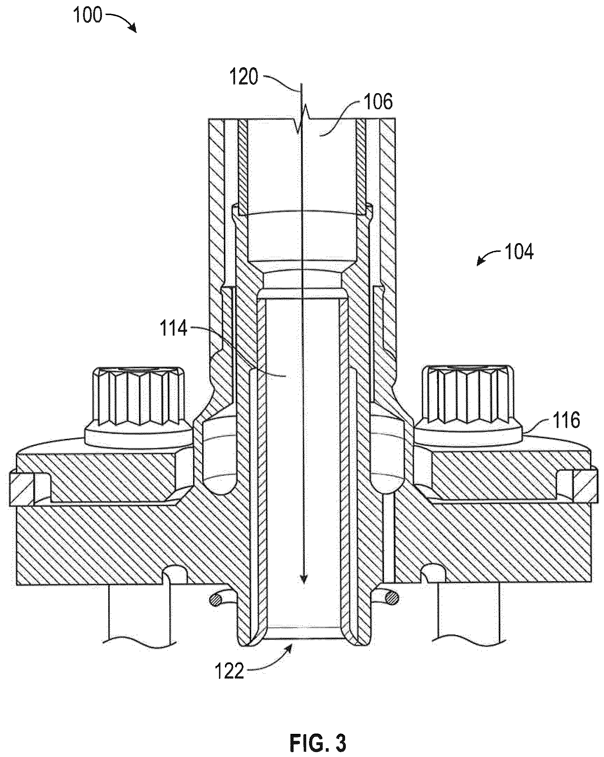

Turning now to FIGS. 1 to 3, a lubricant supply system 100 for a bearing damper 101 in an engine bearing compartment 38 of a gas turbine engine 20 is disclosed. Non-limiting locations of bearing dampers 101 are illustrated schematically by dashed lines in FIG. 1. The bearing compartment 38 rotatably supports an engine component.

The lubricant supply system 100 includes a first interface 102 and a second interface 104. The interfaces 102, 104 are outside the core flow path C, e.g., when the system 100 is in engine 20. The interfaces 102, 104 may heat up because of connections with hotter engine components, due to heat radiating and conducting though the engine. For example, interface 104 may heat up from the turbine intermediate case in the turbine section 28.

In the illustrated embodiment, a supply conduit 106 may be fluidly coupled to the second interface 104 and extends from the first interface 102 to the second interface 104. The conduit 106 supplies lubricant to the bearing damper 101.

The supply conduit 106 including a first discrete cavity 112, extending proximate to the first interface 102, and a second discrete cavity 114, extending proximate to the second interface 104. The discrete cavities 112, 114 may be mutually spaced to be substantially outside a core gas path C of engine 20, e.g., when the system is installed in engine 20. The discrete cavities 112, 114 may be air sealed against the supply conduit 106, insulating fluid in the supply conduit 106 from heat transferred from the interfaces 102, 104. The discrete cavities 112, 114 may be air sealed inner tubes, creating air tight pockets for thermal protection.

In the disclosed system 100, the supply conduit 106 is insulated from heat transferred through the interfaces 102, 104 by air sealed inside the cavities 112, 114. Air is an excellent insulator and it will reduce the influence of the heat transferred, e.g., radiated and conducted from the turbine intermediate case into the interface 104 and into the outer surface of the supply conduit 106. By reducing the influence of the heated interfaces 102, 104 on the supply oil in the damper supply conduit 106, this will prevent the supply oil from overheating and coking.

In an embodiment, the supply conduit 106 includes thermal insulation and shielding, located to be substantially inside a core gas path C of engine 20, e.g., when the system is installed in engine 20. The insulation and shielding protects the damper supply lubricant flowing between the interfaces 102, 104.

The component may be a turbine section 28, which includes a high pressure turbine 54. The first interface 102 may be a turbine intermediate case interface. The second interface 104 may be a bearing compartment interface. The supply conduit 106 may be a bearing damper supply conduit.

In an embodiment, a lubricant inlet 118 at the turbine intermediate case interface 102 is included. Lubricant flows through the inlet 118, into the conduit 106, along axis 120, past the bearing compartment interface 104, and through outlet 122.

In one embodiment, the lubricant supply system 100 is used to supply lubricant to at least one bearing damper 101 of one of the plurality of bearing compartments 38 in the engine 20. In the engine 20, the bearing compartment interface 102 of the system 100 is connected with the bearing compartment 38 of the turbine section 28. The turbine intermediate case interface 104 of the system is connected with the turbine intermediate case. Further, the bearing damper 101 of the system 100 is a bearing damper 101 for the high pressure turbine 54.

Also disclosed herein is a method of supplying lubricant to the bearing damper 101 of bearing compartment 38 of the gas turbine engine 20. The method includes fluidly coupling a damper supply conduit 106 to the bearing damper 101, and insulating the lubricant in the supply conduit 106 from heat transferred through a interfaces 102, 104 connecting the supply conduit 106 to the engine 20. The insulation may be provided by discrete air filled cavities 112, 114 in the supply conduit 106. The cavities 112, 114, located proximate to the interfaces 102, 104 and are mutually spaced to be located substantially outside core gas path C of engine 20. Insulation and shielding protects lubricant flowing between the interfaces 102, 104.

It is to be appreciated that the above configuration is not limited to providing a bowed rotor solution. Rather, the above configuration provides a generally applicable insulated damper lubricant supply, which is separate from the main bearing lubricant supply. Such configuration may be utilized where a pressure differential to the dampers is required throughout the flight envelope, where other solutions are either not available or less desirable.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A lubricant supply system for a bearing damper in an engine bearing compartment of a gas turbine engine, the bearing compartment rotatably supporting an engine component, comprising:
a first interface;
a second interface;
a supply conduit fluidly coupled to the second interface and extending from the first interface to the second interface;
the conduit supplying lubricant to the bearing damper and including:
a first discrete cavity extending proximate to the first interface;
a second discrete cavity extending proximate to the second interface;
the discrete cavities being mutually spaced to be substantially outside a core gas path of the engine;
the discrete cavities being air sealed against the supply conduit, insulating fluid in the supply conduit from heat transferred from the interfaces.

2. The system of claim 1, wherein the discrete cavities are air sealed inner tubes creating airtight pockets for thermal protection.

3. The system of claim 1 or claim 2, wherein the supply conduit includes thermal insulation and shielding located to be substantially inside a core gas path of the engine.

4. The system of any preceding claim, wherein:
the component is a turbine section, which includes a high pressure turbine;
the first interface is a turbine intermediate case interface;
the second interface is a bearing compartment interface; and
the supply conduit is a bearing damper supply conduit.

5. The system of claim 4, including a lubricant inlet at the turbine intermediate case interface through which lubricant flows into the conduit, and an outlet at the bearing compartment interface through which lubricant flows into a bearing compartment.

6. A gas turbine engine, comprising:
a bearing compartment rotatably supporting a component of the engine, the bearing compartment including a bearing damper;
a lubricant supply system for the bearing damper, comprising:
a first interface;
a second interface;
a supply conduit fluidly coupled to the second interface and extending from the first interface to the second interface;
the conduit supplying lubricant to the bearing damper and including:
a first discrete cavity extending proximate to the first interface;
a second discrete cavity extending proximate to the second interface;
the discrete cavities being mutually spaced to be substantially outside a core gas path of the engine;
the discrete cavities being air sealed against the supply conduit, insulating fluid in the supply conduit from heat transferred from the interfaces.

7. The engine of claim 6, wherein the discrete cavities are air sealed inner tubes creating airtight pockets for thermal protection.

8. The engine of claim 6 or claim 7, wherein the supply conduit includes thermal insulation and shielding, located to be substantially inside a core gas path of the engine.

9. The engine of any of claims 6 to 8, wherein:
the component is a turbine section, which includes a high pressure turbine;
the first interface is a turbine intermediate case interface;
the second interface is a bearing compartment interface; and
the supply conduit is a bearing damper supply conduit.

10. The engine of claim 9, wherein the system includes a lubricant inlet at the turbine intermediate case interface through which lubricant flows into the conduit, and an outlet at the bearing compartment interface, through which lubricant flows into a bearing compartment.

11. A method of supplying lubricant to a bearing damper of bearing compartment of a gas turbine engine, comprising:
fluidly coupling a damper supply conduit to the bearing damper; and
insulating the lubricant in the supply conduit from heat transferred through interfaces, connecting the supply conduit to the engine with discrete air filled cavities in the supply conduit, the cavities located proximate to the interfaces and mutually spaced to be located substantially outside core gas path of engine.
